# EUROPÄISCHE PATENTSCHRIFT

(11) **EP 0 434 091 B1**
(45) Veröffentlichungstag und Bekanntmachung des Hinweises auf die Patenterteilung: **01.03.1995**
(21) Anmeldenummer: 90125233.8
(22) Anmeldetag: 21.12.1990
(51) Int. Cl.: A22B 5/08

(54) **Schlachttier-Bürstenwaschmaschine**
Carcass washing machine with brushes
Installation de nettoyage à brosses d'animaux abattus

(30) Priorität: 22.12.1989 DE 3942627
(43) Veröffentlichungstag der Anmeldung: 26.06.1991
(73) Patentinhaber: Banss Maschinenfabrik GmbH & Co. KG, D-35216 Biedenkopf (DE)
(72) Erfinder: Weigel, Wilfried, W-3563 Dautphetal-Friedensdorf (DE)
(74) Vertreter: Klunker . Schmitt-Nilson . Hirsch

(56) Entgegenhaltungen:
- FR-A- 690 730
- GB-A- 1 082 063
- US-A- 2 562 556
- US-A- 2 983 452
- US-A- 3 711 895
- US-A- 3 925 845

## Beschreibung

Gegenstand der Erfindung ist eine Schlachttier-Bürstenwaschmaschine zum Entfernen von Rückständen von der Schlachttieroberfläche nach dem Enthaaren bzw. Abflämmen, wobei die Maschine eine Passage für durch die Maschine hindurchbewegte "Schlachttiere und beidseits der Passage angeordnete, angetriebene, rotierbare Bürstenwalzen aufweist,
dadurch gekennzeichnet,
daß mindestens ein Teil der Bürstenwalzen, vorzugsweise alle Bürstenwalzen, jeweils mit folgenden Merkmalen ausgebildet sind:
- einer hohlen Welle;
- einem aufgesetzten Antriebsmotor;
- einer Flüssigkeits-Drehzuführung an ihrem dem Antriebsmotor entgegengesetzten Ende zum Zuführen von Flüssigkeit in den Wellenhohlraum;
- und Flüssigkeitsaustrittsöffnungen, welche am Wellenumfang verteilt die Wellenumfangswand durchsetzen und zwischen zwei in Längsrichtung der Bürstenwalze benachbarten Bürstenabschnitten angeordnet sind.

Besondere Ausführungsarten der Erfindung sind in den abhängigen Patentansprüchen 2 - 9 angegeben.

Durchlauf-Reinigungsmaschinen für Schlachttiere, insbesondere zum Entfernen von Rückständen auf der Schlachttieroberfläche nach dem Enthaaren, sind bereits bekannt, und zwar in Form von sogenannten Peitschenwaschmaschinen, bei denen an angetriebenen rotierbaren Wellen peitschenartige Stränge befestigt sind. Man kennt auch Schlachttier-Reinigungsmaschinen, die statt der mit peitschenartigen Strängen versehenen Wellen rotierbare Wellen aufweisen, die am Umfang als Bürste ausgebildet sind (US-A-3,925,845. Dieses Dokument enthält die Merkmale des Oberbegriffes des Anspruchs 1). Bisher hat man Reinigungswasser von oben oder von den Seiten her gegen die Schlachttiere und die Peitschen bzw. Bürsten gerichtet, wodurch von der Schlachttieroberfläche gelöste Rückstände weggeschwemmt werden. Es hat sich jedoch herausgestellt, daß sich ein Teil dieser Rückstände, im wesentlichen Haut- und Borstenreste, an den Peitschen bzw. Bürsten festsetzt und von diesen auch durch das aufgesprühte Reinigungswasser nicht weggeschwemmt wird. Die an diesen Rückständen haftenden Keime vermehren sich an den Peitschen oder Bürsten im großen Ausmaß, so daß die Gefahr besteht, daß diese Keime auf die neu zu reinigenden Schlachttiere übertragen werden.

Demgegenüber hat man bei den erfindungsgemäß ausgebildeten Bürstenwalzen im Betrieb eine dauernde Flüssigkeitsdurchströmung von innen nach außen, und diese Flüssigkeitsdurchströmung stellt weitestgehend sicher, daß Rückstände der angesprochenen Art kontinuierlich aus den Bürsten ausgeschwemmt werden. Durch die Erfindung wird somit die Aufgabe gelöst, eine in hygienischer Hinsicht verbesserte Schlachttier-Reinigungsmaschine zu schaffen.

Die erfindungsgemäße Schlachttier-Bürstenwaschmaschine dient insbesondere zum Reinigen von geschlachteten Schweinen nach dem Enthaaren bzw. Abflämmen, wobei die Schlachttiere im großen und ganzen kontinuierlich durch die erfindungsgemäße Durchlauf-Reinigungsmaschine gefördert werden.

Aus dem Dokument GB-A-1,082,063 ist eine Maschine zum Enthaaren von geschlachteten Schweinen im Kopf- und Beinbereich bekannt. Diese Maschine arbeitet mit rotierenden Walzen, die dicht mit langen, fingerartigen Kratzfortsätzen besetzt sind. Die Kratzfortsätze sollen zwar nachgeben können, haben aber eine größere Steifigkeit als Bürstenstränge. Die Walzen sind hohl und haben am Walzenumfang Öffnungen für den Austritt von Wasser. Aus dem Dokument US-A-3,711,895 ist eine Maschine zum Entfernen von Blutklumpen und Knochenmehl aus dem geöffneten Brustraum geschlachteter Schweine bekannt. Diese Maschine arbeitet mit einer rotierenden Walze, die mit ziemlich steifen, aber elastisch biegbaren Fortsätzen besetzt ist. Die Walze ist hohl und hat am Walzenumfang Öffnungen für den Austritt von Wasser.

In den meisten Fällen, insbesondere wenn Bürstenwalzen mit im wesentlichen vertikaler Achse vorgesehen sind, hat die erfindungsgemäße Maschine auf jeder Seite der Schlachttierpassage mehrere Bürstenwalzen hintereinander, wobei normalerweise bei größeren Leistungen, gemessen in gereinigtem Schlachttieren pro Stunde, mehr Bürstenwalzen hintereinander vorgesehen sind als bei kleineren Leistungen. Es können Bürstenwalzen mit im wesentlichen senkrechter Achse, mit geneigter Achse oder mit im wesentlichen horizontaler Achse vorgesehen sein, wobei im letztgenannten Fall normalerweise eine Verfahrbarkeit der betreffenden Bürstenwalze in Aufwärtsrichtung und in Abwärtsrichtung vorgesehen ist oder mehrere Bürstenwalzen übereinander vorgesehen sind. Es ist ferner möglich, mit einer Kombination von im wesentlichen senkrechten und im wesentlichen waagerechten Bürstenwalzen zu arbeiten, z.B. waagerechte Bürstenwalzen anschließend an die Eintrittseite der Maschine und senkrechte Bürstenwalzen mehr zur Austrittsseite der Maschine oder umgekehrt. Es ist bebevorzugt, sämtliche Bürstenwalzen der Maschine so auszubilden, wie im kennzeichnenden Teil des Anspruchs 1 angegeben. Man kann aber auch beispielsweise die Bürstenwalzen, die sich mehr am Ende der Maschine befinden, ohne die Flüssigkeitsdurchströmung her ausbilden, weil dort die beschriebene Gefahr der Keimvermehrung von Haus aus geringer ist.

Drehzuführungen, bei denen von einem stationären Basisteil her Flüssigkeit einem relativ zu dem Basisteil rotierenden Teil zuführbar ist, sind an sich bekannt und käuflich erhältlich.

Es ist günstig, wenn Flüssigkeitsaustrittsöffnungen längs und umfangsmäßig der betreffenden Bürstenwalzenwelle verteilt vorgesehen sind, um die betreffende Bürstenwalze möglichst vollständig von innen her zu durchströmen. Man kann Bürstenwalzen mit mehreren in Längsrichtung benachbarten Bürstenabschnitten einsetzen und jeweils zwischen zwei benachbarten Bürstenabschnitten eine Gruppe von Flüssigkeitsaustrittsöffnungen vorsehen, wobei jede Gruppe längs des Wellenumfangs verteilt mehrere, insbesondere drei, vier, fünf oder mehr, Flüssigkeitsausstrittsöffnungen aufweist. Dies schafft eine genügend gleichmäßige und vollständige, kontinuierliche Durchströmungsreinigung der Bürsten, wobei die Flüssigkeitsaustrittsöffnungen dennoch konstruktiv günstig und gut zugänglich untergebracht sind.

In bevorzugter Weiterbildung der Erfindung bestehen bei mindestens einer, bei mehreren oder bei allen Bürstenwalzen die Bürsten aus glatten Kunststoffsträngen. Hieran haften Rückstände und Keime schlecht, und die erfindungsgemäße Durchströmungsreinigung ist besonders effektiv.

Nach einem weiteren Aspekt schafft die Erfindung eine Durchlauf-Reinigungsmaschine für Schlachttiere, bei der mindestens der Hauptteil der oberen Begrenzung des Maschineninnenraums gegenüber der Horizontalen geneigt ist. Rückstände und Keime haften an der geneigten oberen Begrenzung des Maschineninnenraums weniger gut und werden von dort effektiv weggeschwemmt, so daß auch in diesem Bereich die Hygiene gesteigert ist.

Die Durchströmung der Bürstenwalzen von innen nach außen erfolgt durch den Druck der innen zugeführten Flüssigkeit, aber auch durch den Einfluß der Fliehkraft beim Rotieren der betreffenden Bürstenwalze. Die Flüssigkeitsaustrittsöffnungen können als Düsen gestaltet sein und können von der reinen Radialrichtung abweichend gerichtet sein.

Als den betreffenden Bürstenwalzen zuzuführende Flüssigkeit eignet sich Wasser, das gegebenenfalls erwärmt und/oder mit einem desinfizierenden Zusatz versehen sein kann. Es ist möglich, beispielsweise am Ende einer Schlachtungsschicht die Bürsten mit einer Flüssigkeit zu durchspülen, die Reinigungsmittel oder Desinfektionsmittel in besonders hoher Konzentration enthält, um so eine besonders wirksame Enddesinfektion durchzuführen. Danach kann mit heißem Wasser durchgespült werden. Da sich hierbei die Bürstenwalzen vorzugsweise drehen, wird die Reinigungsflüssigkeit im gesamten Maschineninnenraum versprüht, so daß auch dessen Wände effektiv gereinigt und desinfiziert werden.

Zusätzlich können Flüssigkeitsaustrittsöffnungen bzw. -düsen oben und/oder seitlich im Maschineninnenraum vorgesehen sein, um die Wegwaschwirkung der aus den Bürstenwalzen austretenden Flüssigkeit zu verstärken und zu unterstützen.

Die Erfindung und Weiterbildungen der Erfindung werden nachfolgend anhand eines zeichnerisch dargestellten Ausführungsbeispiels noch näher erläutert. Es zeigt:
- Fig. 1: einen Querschnitt durch eine Schlachttier-Bürstenwaschmaschine;
- Fig. 2: einen vertikalen Längsschnitt durch den unteren Bereich einer Bürstenwalze.

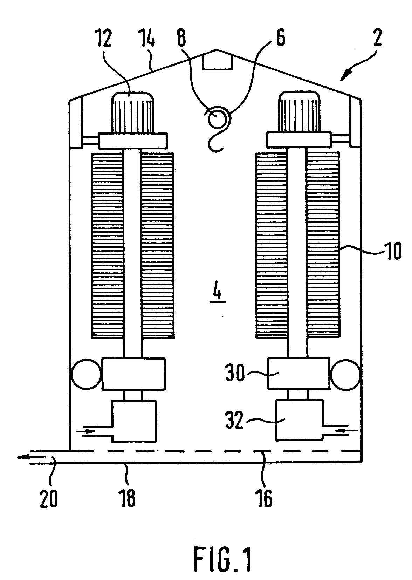

Figur 1 veranschaulicht den generellen Aufbau der Bürstenwaschmaschine 2. Längs durch die Maschine 2 (d.h. senkrecht zur Zeichenebene der Fig. 1) verläuft eine Passage 4 für durch die Maschine 2 hindurch zu fördernde Schlachttiere, insbesondere Schweine. Die nicht eingezeichneten Schlachttiere hängen an den Hinterbeinen aufgehängt an Schlachthaken 6, die ihrerseits auf einer längs durch die Maschine führenden Rohrbahn 8 hängen. Für das Fördern der Schlachthaken 6 längs der Rohrbahn 8 ist ein nicht eingezeichneter Kettenförderer vorgesehen, der mit Mitnehmern von oben her an den Schlachthaken 6 angreift.

Beidseits der Passage 4 sind Bürstenwalzen 10 mit vertikaler Achse angeordnet, und zwar senkrecht zur Zeichenebene der Fig. 1 auf jeder Seite der Passage 4 mehrere hintereinander. Die Bürstenwalze 10 sind sowohl im unteren Bereich als auch im oberen Bereich am Maschinenständer drehbar gelagert. Für jede Bürstenwalze 10 ist ein oben aufgesetzter Antriebs-Elektromotor 12 vorgesehen.

Die obere Begrenzung 14 des Maschineninnenraums ist wie ein Hausdach gestaltet, so daß sie im wesentlichen aus zwei entgegengesetzt geneigten Flächen besteht. Im unteren Bereich der Maschine 2 ist ein mit zahlreichen Öffnungen versehener Zwischenboden 16 vorgesehen. Darunter befindet sich eine Bodenfläche 18, auf der sich das Waschwasser sammelt, von wo es durch eine Abzugsöffnung 20 weggeführt wird.

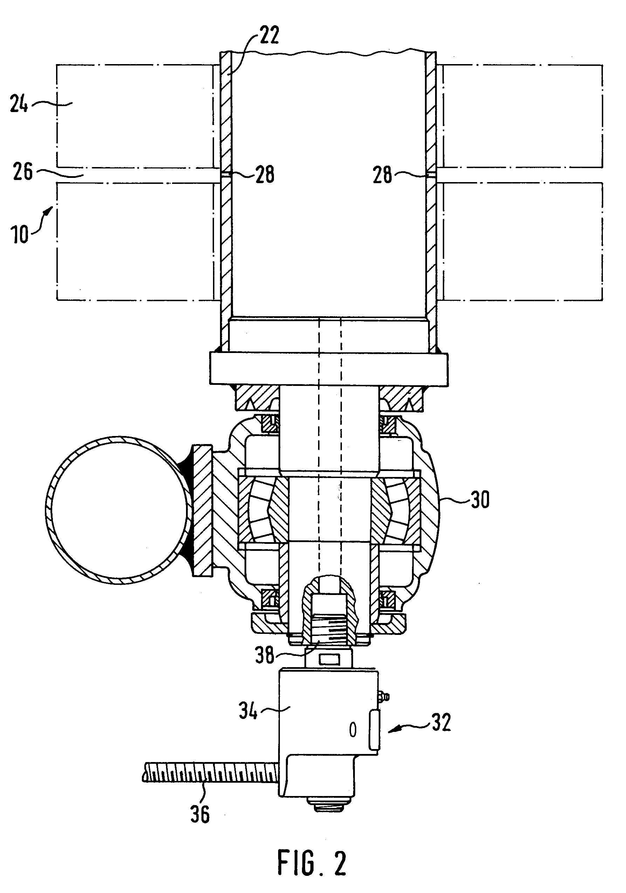

In Fig. 2 erkennt man den Aufbau der Bürstenwalze 10 mehr im einzelnen. Die gezeichnete Bürstenwalze 10 weist eine zentrale Hohlwelle 22 auf und ist auf ihre Länge mit mehreren Bürstenabschnitten 24 besetzt. Zwischen zwei benachbarten Bürstenabschnitten 24 besteht jeweils ein relativ kleiner Abstand. In diesen Abstandsraum 26 münden, umfangsmäßig verteilt, vier Flüssigkeitsaustrittsöffnungen 28, die die Wellenumfangswand radial durchsetzen.

In ihrem unteren Endbereich ist die Bürstenwalze 10 rotierbar gelagert. Unterhalb der Lagerung 30 ist eine Drehzuführung 32 für Flüssigkeit zum Innenraum der Welle 22 vorgesehen. Die Drehzuführung 33 besteht im wesentlichen aus einem stationären Basisteil 34 mit Flüssigkeitszuleitung 36 sowie einem in dem Basisteil 34 um eine vertikale Achse rotierbaren Teil 38. Die käuflich erhältliche Drehzuführung 32 ist innen so aufgebaut, daß die Flüssigkeit von der Zuleitung 36 aus einem in dem Teil 38 längs verlaufenden, nicht eingezeichneten Kanal zugeführt wird. Das Teil 38 ist mit dem unteren Ende der Welle 32 verbunden. Im unteren Bereich der Welle 22 verläuft ein vertikaler Kanal 40, der eine Verbindung zwischen dem Kanal in dem Teil 38 und dem eigentlichen Wellenhohlraum herstellt.

Die Bürstenabschnitte bestehen aus direkt oder indirekt an der Welle 22 befestigten, glatten Kunststoffsträngen, die entweder infolge einer gewissen Eigensteifigkeit eine mehr oder weniger radiale Ausrichtung haben oder sich bei Rotation der Bürstenwalze 10 aufgrund der Fliehkraft im wesentlichen radial einstellen.

Es wird darauf hingewiesen, daß sich die weiter vorn beschriebene Rohrbahn 8 und/oder der zugeordnete Kettenförderer oben außerhalb der oberen Innenraumbegrenzung 14 befinden können, so daß die Haken 6 oder die Mitnehmer des Kettenförderers durch einen Schlitz in der Begrenzung 14 in den Maschineninnenraum ragen. Dieser Schlitz kann bürstenartige Dichtstreifen aufweisen.

Es wird ferner darauf hingewiesen, daß die Maschine 2 so ausgebildet sein kann, daß unten in der Maschine abgezogene Reinigungsflüssigkeit zu den Bürstenwalzen 10 rezirkuliert wird, gegebenenfalls nach Filtrierung, Temperierung, Zusatz frischen Reinigungs- oder Desinfektionsmittels etc. Es versteht sich, daß eine oder mehrere geeignete Pumpen vorgesehen sind, um die Flüssigkeit mit Druck den Drehzuführungen 32 zuzuführen. Bei gezeichneten Ausführungsbeispiel sind sämtliche Bürstenwalzen 10 gleich ausgebildet.

## Patentansprüche

1. Schlachttier-Bürstenwaschmaschine (2) zum Entfernen von Rückständen von der Schlachttieroberfläche nach dem Enthaaren bzw. Abflämmen, wobei die Maschine eine Passage (4) für durch die Maschine (2) hindurchbewegte Schlachttiere und beidseits der Passage angeordnete, angetriebene, rotierbare Bürstenwalzen (10) aufweist,
**dadurch gekennzeichnet,**
daß mindestens ein Teil der Bürstenwalzen (10), vorzugsweise alle Bürstenwalzen (10), jeweils mit folgenden Merkmalen ausgebildet sind:
- einer hohlen Welle (22);
- einem aufgesetzten Antriebsmotor (12);
- einer Flüssigkeits-Drehzuführung (32) an ihrem dem Antriebsmotor (12) entgegengesetzten Ende zum Zuführen von Flüssigkeit in den Wellenhohlraum;
- und Flüssigkeitsaustrittsöffnungen (28), welche am Wellenumfang verteilt die Wellenumfangswand durchsetzen und zwischen zwei in Längsrichtung der Bürstenwalze (10) benachbarten Bürstenabschnitten (24) angeordnet sind.

2. Maschine nach Anspruch 1,
**dadurch gekennzeichnet,**
daß bei der betreffenden Bürstenwalze (10) längs der Welle (22) verteilt mehrere Gruppen von am Wellenumfang verteilten Flüssigkeitsaustrittsöffnungen (28) vorgesehen sind.

3. Maschine nach Anspruch 1 oder 2,
**dadurch gekennzeichnet,**
daß bei der betreffenden Bürstenwalze (10) die Bürstenabschnitte (24) aus glatten Kunststoffsträngen aufgebaut sind.

4. Maschine nach einem der Ansprüche 1 bis 3,
**dadurch gekennzeichnet,**
daß die betreffende Bürstenwalze (10) mit im wesentlichen senkrechter Achse angeordnet ist.

5. Maschine nach einem der Ansprüche 1 bis 3,
**dadurch gekennzeichnet,**
daß die betreffende Bürstenwalze (10) mit geneigter Achse angeordnet ist.

6. Maschine nach einem der Ansprüche 1 bis 3,
**dadurch gekennzeichnet,**
daß die betreffende Bürstenwalze (10) mit im wesentlichen horizontaler Achse angeordnet ist, wobei vorzugsweise die Bürstenwalze (10) in Aufwärtsrichtung und in Abwärtsrichtung verfahrbar ist oder mehrere Bürstenwalzen (10) übereinander vorgesehen sind.

7. Maschine nach einem der Ansprüche 1 bis 6,
**dadurch gekennzeichnet,**
daß eine Kombination von im wesentlichen senkrechten und im wesentlichen waagerechten Bürstenwalzen (10) vorgesehen ist.

8. Maschine nach einem der Ansprüche 1 bis 7,
**dadurch gekennzeichnet,**
daß auf jeder Seite der Passage (4) - in Bewegungsrichtung der Schlachttiere hintereinander - mehrere Bürstenwalzen (10) vorgesehen sind.

9. Maschine nach einem der Ansprüche 1 bis 8,
**dadurch gekennzeichnet,**
daß mindestens der Hauptteil der oberen Begrenzung (14) des Maschineninnenraums gegenüber der Horizontalen geneigt ist.

## Claims

1. A brush-type carcass washing machine (2) for removing residues from the carcass surface after dehairing or singeing, said machine comprising a passage (4) for carcasses moved through the machine (2) as well as driven rotatable brush rollers (10) disposed on both sides of said passage,
characterized in
that at least part of the brush rollers (10), preferably all brush rollers (10), each have the following features:
- a hollow shaft (22);
- a driving motor (12) attached thereonto;
- a rotary liquid supply (32) at its end opposite the driving motor (12) for supplying liquid into the shaft cavity;
- and liquid discharge openings (28) distributed across the shaft circumference and extending through the shaft peripheral wall and disposed between two brush sections (24) adjacent each other in the longitudinal direction of the brush roller (10).

2. A machine according to claim 1,
characterized in that the respective brush roller (10) is provided along said shaft (22) with a plurality of groups of liquid discharge openings (28) distributed across the shaft circumference.

3. A machine according to claim 1 or 2,
characterized in that the respective brush roller (10) has said brush sections (24) composed of smooth plastics strands.

4. A machine according to any one of claims 1 to 3,
characterized in that the respective brush roller (10) is disposed with its axis substantially vertical.

5. A machine according to any one of claims 1 to 3,
characterized in that the respective brush roller (10) has its axis disposed in inclined manner.

6. A machine according to any one of claims 1 to 3,
characterized in that the respective brush roller (10) is disposed with its axis substantially horizontal, the brush roller (10) being preferably adapted to be driven in upward direction and downward direction or several brush rollers (10) being provided one above the other.

7. A machine according to any one of claims 1 to 6,
characterized in that a combination of substantially vertical and substantially horizontal brush rollers (10) is provided.

8. A machine according to any one of claims 1 to 7,
characterized in that a plurality of brush rollers (10) is provided on each side of said passage (4), one after the other in the direction of movement of the carcasses.

9. A machine according to any one of claims 1 to 8,
characterized in that at least a major part of the upper limitation (14) of the machine interior is inclined with respect to the horizonal.

## Revendications

1. Machine de lavage à brosses (2) pour animaux abattus, pour éliminer las dépôts de la surface des animaux abattus après l'ébourrage, ou le nettoyage par passage à la flamme, la machine présentant un passage (4) pour des animaux abattus, passant dans la machine (2), et des rouleaux à soies (10) tournants, entraînés, étant disposés des deux côté du passage, caractérisé en ce qu'au moins une partie des rouleaux à soies (10), de préférence à tous les rouleaux, sont respectivement dotés des caractéristiques ci-après :
- un arbre creux (22);
- un moteur d'entraînement (12) placé au-dessus d'eux;
- une amenée tournante de liquide (32), sur leur extrémité opposée au moteur d'entraînement (12), pour amener du liquide dans l'espace creux d'arbre;
- et des ouvertures de sortie de liquide (28), traversants, en étant placés suivant une distribution sur la périphérie de l'arbre, la paroi de cette périphérie d'arbre et disposées entre deux tronçons équipés de soi es (24) voisins, dans la direction longitudinale du rouleau à soies (10).

2. Machine selon la revendication 1, caractérisée en ce que, dans le rouleau à soies (10) concerné sont prévus, répartis la long de l'arbre (12), plusieurs groupes d'ouverture de sortie de liquide (28), divisés, sur la périphérie de l'arbre.

3. Machine salon la revendication 1 ou 2, caractérisée en ce que, dans le rouleau à soies (10) concerné, les sections à soies (24) sont composées de tronçons en matière synthétique, lisses.

4. Machine salon l'une des revendications 1 à 3, caractérisé en ce que le rouleau à soies (10) concerné est disposé avec un axe sensiblement vertical

5. Machine salon l'une des revendications 1 à 3, caractérisée en ce que le rouleau à soies (10) concerné est disposé avec un axe incliné.

6. Machine selon l'une des revendications 1 à 3, caractérisée en ce que le rouleau à soies (10) concerné est disposé avec un axe sensiblement horizontal, de préférence la rouleau à soies (10) étant déplaçable dans la direction de la montée et dans la direction de la descente, ou bien plusieurs rouleaux à soies (10) étant prévus les uns au-dessus des autres.

7. Machine sel on l'une des revendications 1 à 6, caractérisée en ce qu'est prévu une combinaison de rouleaux à soies (10) sensiblement verticaux et de rouleaux à soies (10) sensiblement horizontaux.

8. Machine selon l'une des revendications 1 à 7, caractérisée en ce que, de chaque côté du passage (4), sont prévu plusieurs rouleaux à soies (10) - placés les uns derrière les autres dans la direction de déplacement des animaux abattus.

9. Machine salon l'une des revendications 1 à 8, caractérisé an ce qu'au moins la partie principal de la limitation supérieure (14) de l'espace intérieur de la machine est incliné par rapport à l'horizontale.
